# EUROPEAN PATENT SPECIFICATION

(11) **EP 3 997 502 B1**
(45) Date of publication and mention of the grant of the patent: **23.04.2025**
(21) Application number: 20737452.1
(22) Date of filing: 08.07.2020
(51) Int. Cl.: G02B 6/52, G02B 6/44

(54) **JUNCTION FOR FIBER OPTIC CABLE DUCTS**
VERBINDUNG FÜR GLASFASERKABELFÜHRUNGEN
JONCTION POUR CONDUITS DE CÂBLES À FIBRES OPTIQUES

(30) Priority: 10.07.2019 GB 201909903
(43) Date of publication of application: 18.05.2022
(73) Proprietor: Reliance Worldwide Corporation (UK) Limited, West Drayton, Middlesex UB7 8JL (GB)
(72) Inventor: ANSELL, Glen, Middlesex HA88HF (GB); SMITH, Joshua, Middlesex UB78JL (GB)
(74) Representative: Boult Wade Tennant LLP
(86) International application number: PCT/EP2020/069228
(87) International publication number: WO 2021/005100

(56) References cited:
- EP-A1- 2 317 357
- JP-A- 2010 007 820
- US-A- 6 053 639
- US-A1- 2009 263 186

## Description

The present invention relates to a fibre optic cable tube connector for use above or below ground.

Such connectors used in the laying of fibre optic cables. The cables are used, for example, to provide a fibre optic cable connection from a junction box to a building such as an office or residence in order to provide a connection for internet data.

The fibre optic cables are provided in bundles of individual fibres which can be up to several kilometres long. The fibre bundles/cables are fed through tubes (often referred to as ducts/microducts/conduits) which are typically 50 metres long, but can be as long as 2000 metres. A number of tubes therefore may need to be connected together in order to support the full run of the fibre bundle.

Because of the manner of their use, there are unique set of demands on a fibre optic cable tube connector.

Its outer diameter must be as small as possible in order to minimise bulk as the connectors are often grouped together in large numbers.

The cable bundle running through the middle of the connector must be visible in use. This is because it is essential for an operator to be able to visually confirm whether a fibre bundle runs through a particular connector. The tubes will be laid and the fibres may not be passed through until much later. An operator therefore needs to be able to determine which tubing does not yet have a fibre in place. Further, in the event of a fibre failure the operator can determine from a visual inspection whether a fibre is in place at a particular connector. The connectors also need to be highly impact resistant. Cables are usually buried in the ground and, for maintenance, they need to be dug up. This is generally done by a labourer with a spade, and the first that the labourer will know if the presence of the cable is when it is struck by the spade. The connectors therefore need to be sufficiently robust to resist such an impact. In practice, they need to pass a '15J impact test'.

These latter two requirements, namely the need to be able to view the fibre and the need for high impact resistance represent conflicting requirements.

For most applications, connectors are made from an opaque plastic and these are readily available in the impact resistance forms. However, non-opaque materials are typically amorphous materials and are inherently more brittle than the opaque equivalents.

As a result of this, prior art fibre optic cable connectors use a number of circumferential ribs in order to reinforce the connector. However, this leads to further problems. The ribs create a discontinuous profile for the connector leading to highly radiused regions which affect transparency. Further, dirt and stones are trapped between the ribs. The presence of stones can lead to an impact being directly transmitted to the ribs thereby causing damage. Further, the dirt is likely to be compacted over time and is therefore difficult to clear when trying to make a visual inspection of the fibre.

US patent application publication US 2009/263186 A1 discloses a joint including a fitting for fluid conduits, a sleeve, and a pipe. The fitting exhibits a base body, an outer body and a supporting body, wherein the outer body and supporting body form a groove between them. The sleeve embraces a pipe end under a pre-stress, wherein the pipe end with the sleeve engages into the groove under a pre-stress.

The present invention addresses these problems.

According to the present invention, we have provided a fibre optic tube connector according to claim 1.

The present invention therefore takes a completely different approach to impact protection from that of the prior art. Rather than providing a number of external ribs, the impact protection of the present invention is provided by an inner sleeve which is spaced from an outer sleeve to define a gap.

Now, any impact on the body which is likely to cause deformation of the body will tend to cause inward deformation of the outer sleeve. However, because of the presence of the gap, any impact which is not directly aligned with the web of material can cause an inward deformation of twice the width of the gap before the inner sleeve will be compressed.

The webs could be arranged to be diametrically opposed to one another as the chance of impact aligned with a web is relatively small. However, preferably the or each web is arranged such that upon radical impact directly aligned with the web, the outer sleeve can be deformed by the width of the gap before any deformation occurs on the inner sleeve.

Because of this effect, it is desirable to make the/each web as small as possible. In practice, this is limited by the requirements of the moulding process as the plastic which forms the inner sleeve is required to flow through the web region.

While the optimum performance is met by a single web, the limitations imposed by the moulding process may mean that more than one web is required in practice. If more than one web is used, each web is preferably angularly offset from the other webs such that no part of the inner sleeve is supported at diametrically opposed locations. If this were to occur, any impact in this direction would be directly transmitted to the inner sleeve.

One of the webs needs to be made sufficiently robust that it will maintain the support of the inner sleeve within the outer sleeve. However, additional webs may be provided for moulding purposes. When a number of webs are provided, these can be made thinner such that they are effectively sacrificial webs. In the event of an impact, any deformation which is transmitted through the wall of the outer sleeve may cause the closest web to fail leaving the other webs to maintain the optimal location of the inner sleeve. The loss of one such sacrificial web is not a problem in use as the remaining webs hold the inner sleeve in place. The loss of more than one web due to impact will not be problematic as the inner sleeve is supported by the previously assembled tube.

The webs preferably extend in a non-radial direction, for example tangentially to the inner sleeve so as to reduce the component of the force transmitted to the inner sleeve.

The webs are preferably in the same radial plane. They are preferably offset from the centre of the connector so as not to impair visibility in this region.

As will be understood from the above description, the web should occupy a relatively small area of the outer surface of the inner sleeve.

Preferably, the total circumferential extent of all of the webs is less than 50%, preferably less than 20%, more preferably less than 10% and most preferably less than 5% of the circumference of the outer wall of the inner sleeve. By occupying less than 50% of the circumference of the outer wall of the inner sleeve, the web or webs can be arranged such that there is no diametric load path through two parts of the web at diametrically opposed locations on opposite sides of the inner sleeve.

Preferably, the web occupies less than 30%, more preferably less than 25% and most preferably less than 20% of the axial length of the outer wall of the inner sleeve. Preferably, the web occupies less than 10%, more preferably less than 5% and most preferably less than 3% of the area of the outer wall of the inner sleeve. All of these measurements represent the dimension of the web at its widest point.

Because of the different approach taken by the present invention to impact protection, the need for the ribs of the prior art can be significantly reduced. Preferably, the present invention eliminates the need for ribs all together so that preferably, the outer face of the connector bodies is devoid of ribs. This removes any stress concentrators at the outer surface of the connector as well as removing any potential dirt traps.

Preferably, at least the axially central third of the connector body has a continuous cylindrical outer surface of constant radius. This central portion corresponds to the region where the fibre will be exposed in the connector. More preferably, the requirement for a continuous cylindrical outer surface of a constant radius extends along substantially all of the length of the connector body. The ends of the connector body, however, may have a radius profile.

Not only does such an arrangement remove the stress concentrators and dirty traps, it also improves the clarity of the connector. The continuous cylindrical surface is much easier to see through than the ribs of the prior art in which, even after cleaning, a residual amount of dirt is likely to remain. Further, the use of ribs caused internal reflection of light which hampers direct visibility of the region at the centre of the connector. This does not happen with the cylindrical outer surface. Not only is this easy to wipe clean, but the mould can be polished in the central region providing further visibility improvements.

An example of a fibre optic cable tube connector in accordance with the present invention will now be described with reference to the accompanying drawings in which:
Figs. 1A-1C are cut-away perspective views of the fibre optic cable tube connector according to the claimed invention showing the progressive insertion of a tube;
Fig. 2A is a cross-sectional view of the connector body according to the claimed invention in a plane perpendicular to the main access of the connector body through line A-A in Fig. 2B;
Fig. 2B is a cross-sectional view of the connector body according to the claimed invention in a plane through the main axis of the body through line B-B in Fig. 2A;
Fig. 2C is a view in the same plane as Fig 2A showing a second example of a fibre optic cable tube connector according to the clamed invention;
Fig. 2D is a view in the same plane as Fig. 2B showing the second example;
Fig. 3 is a cross-section in the plane of Fig. 2B of the connector with tubes connected and a fibre bundle passing through;
Fig. 3A shows the central portion of Fig. 3 in greater detail;
Fig. 3B shows a view similar to Fig. 3A, with a different configuration of tubing and without the fibre passing through;
Figs. 4A and 4B correspond to Figs. 3A and 3B illustrating a prior art arrangement;
Fig. 5 is an exploded perspective view of the connector from one end of the connector body;
Fig. 6A is the equivalent to Fig. 5 in non-exploded form, showing the cartridge and collet in a first angular configuration;
Fig. 6B is a cross-section through a plane in Fig. 6A through the locking tabs;
Figs. 7A and 7B are views corresponding to Figs. 6A and 6B respectively showing the cartridge and collet in a second angular configuration; and
Figs. 8A and 8B correspond to Figs. 7A and 7B but show the tube in situ.

The connector comprises a connector body 1 having a generally hollow cylindrical configuration centred on a main axis X. A connector 2 (described in greater detail below) is provided at either end to receive and grip a tube T at each end which is sealed by an O ring 3.

The body 1 is moulded from a non-opaque plastic. The plastic must be such that it is clear enough that a visual inspection externally of the connector allows an operator to determine whether a fibre cable or fibre bundle F is present in the centre of the connector. Ideally, the body should be as close to transparent as possible. However, practical considerations mean that the body will not be truly transparent. Instead, the body is likely to translucent to a sufficient extent that the fibre is visible. Suitable materials are polycarbonate, polystyrene, polyester, acrylic and nylon. The body 1 is formed in a moulding process and can optionally be polished to improve the clarity of the body. As can be seen in the various figures, the outer profile of the body is a smooth configuration which is devoid of external ribs thereby eliminating any stress concentrations and orifices for the accumulation of dirt.

The body 1 is made up of an outer sleeve 5 and an inner sleeve 6 which are connected by at least one web 7 as described below.

The outer sleeve 5 has an axial bore 8 which is open at the distal end and which has a first step 10 and second step 11 which receive the connector 2 as described below.

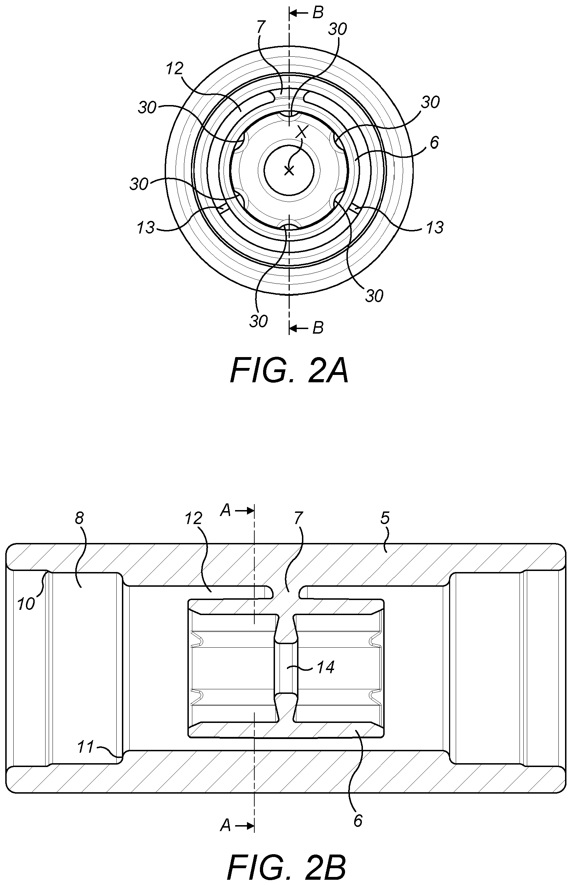

The inner sleeve 6 is retained by the web 7 so as to form a gap 12 of generally uniform thickness as best seen in Fig. 2A.

As will be appreciated from Figs. 2A and 2B, the web 7 extends across only a very small part of the inner sleeve 6 so that the gap 12 is present for most of the length and circumference of the inner sleeve 6.

Any impact on the outer sleeve 5 which occurs during the installation of the tubing, or when the tubing is dug up for maintenance can cause deformation of the outer sleeve 5. By providing the gap 12, the effect of any external impact on the outer sleeve 5 is isolated, to a significant extent, from the inner sleeve 6, and hence is largely prevented from causing any change to the diameter of the inner bore 14 of the inner sleeve 6. Initial tests show that this design is effective in resisting external impact. Further, this can be achieved in a manner which does not require the addition of ribs and does not require an increase in the outer diameter of the connector.

Use of the very small size of the web 7 means that the chance of an impact being directly transmitted from the outer sleeve 5 to the inner sleeve 6 via the web 7 is greatly reduced. Even if this were to occur (i.e. an impact were to be applied in the vertical downward direction in Fig. 2A at the centre point connector in Fig. 2B), the inner sleeve 6 can still deflect by an amount equivalent to the width of the gap 12 before any stresses occur on the inner sleeve which would have an adverse effect on the internal bore 14 of the inner sleeve 6.

In order to mould the body 1 all of the plastic required for the inner sleeve 6 is required to pass through the webs 7, 15. This represents a reasonably significant amount of plastic which flows into a relatively complex and narrow flow path. In order to alleviate this, we are contemplating providing one or more additional webs 13 depicted schematically in Fig. 2A these are angularly offset with respect to the web 7 and may also be axially offset to ensure that there is no point at which the inner sleeve 6 is supported on diametrically opposed sides. The additional webs 13 provide further flow paths for the plastic into the inner sleeve during the moulding process. Multiple webs can be made weaker than a single web such that whichever web is closest to the impact will preferentially fracture under an applied load leaving the remaining ribs to support the inner sleeve 6.

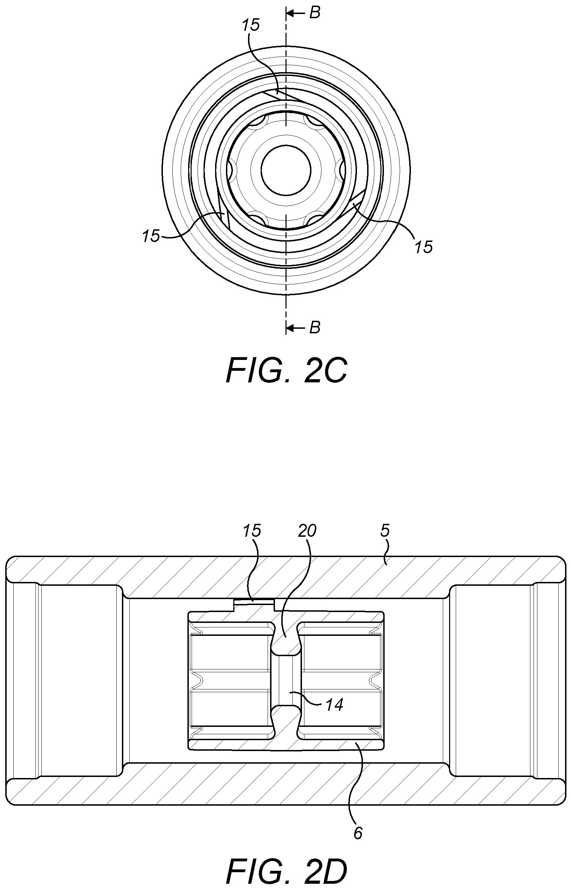

Instead of extending in a radial sense as shown in Fig. 2A, the or each web 15 may extend tangentially as shown in Fig. 2C, or in any other direction across the gap 12. As shown in Fig. 2D, the webs 15 are axially offset from an annular flange 20 so that they do not impair the visibility into this region.

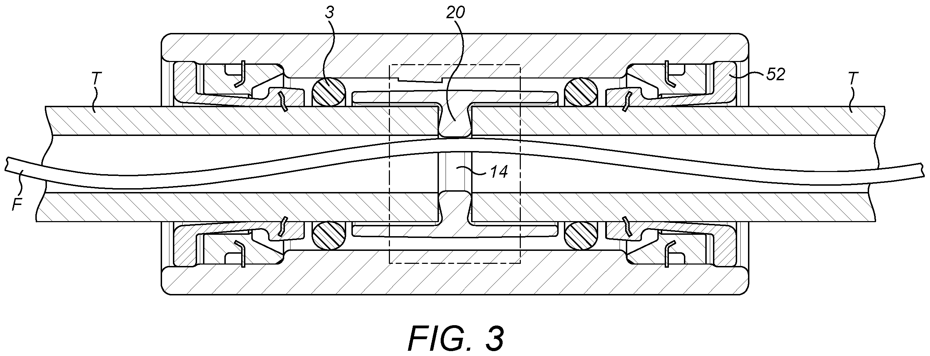

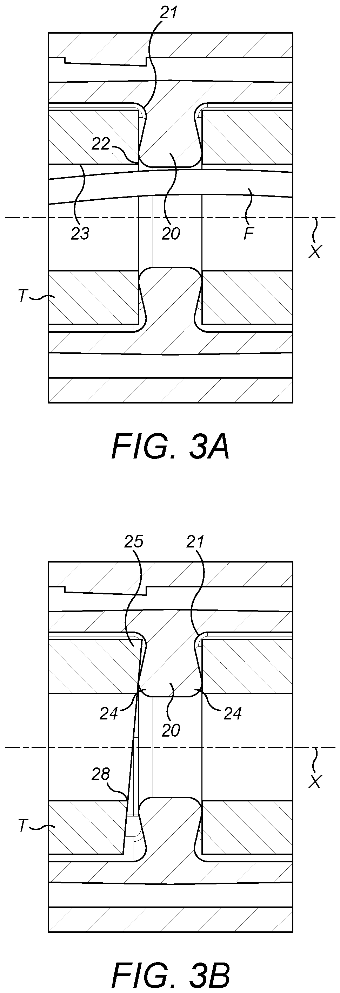

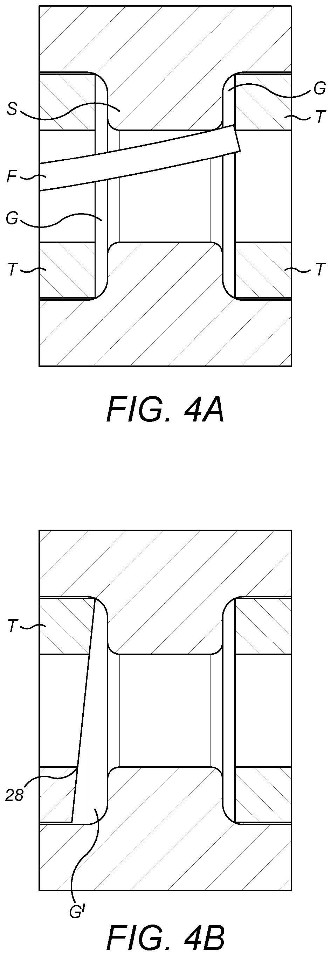

The manner in which the connector is configured in order to avoid snagging of the fibre F will now be described with reference to Figs. 3, 3A and 3B with Figs. 4A and 4B being used to provide a comparison with the prior art.

Fig. 3 shows the connector body 1 with a tube T fixed and sealed in either end. Once connected in this way, the fibre F is blown from one end through the tube T, across the interface between the tubes and into the adjacent tube.

The tubes T abut against the annular flange 20 at a midpoint of the inner sleeve 6. The connectors 2 and O-rings 3 broadly have the same inner diameter as the inner diameter of the inner sleeve 6 so that, when the tube T is pushed into the body 1, it is guided into the inner sleeve 6. The end of the tube T then abuts the annular flange 20. As best seen in Figs. 3A and 3B, the annular flange 20 is provided undercut portion 21 such that the thickness of the annular flange 20 in the axial direction increases towards the axis X.

As a result of this, the innermost corner 22 of the tube T is the first part of the tube T to abut the annular flange 20. This means that there is no gap between the inner face 23 of the tube T and the annual flange 20.

The undercut portion 21 is radiused as shown in Figs. 3A and 3B. Similarly, the radially innermost corners 24 of the annular flange are radiused to present a smooth surface to the fibre.

In comparison with the prior art arrangement shown in Fig. 4A, the elimination of the gap G between the end of the tube T and the annular flange 20 means that there is no exposed abrupt edge of the tube T for the fibre F to snag on.

Fig. 3B depicts the situation where the left hand tube has been cut at an angle which is slightly oblique to a plane perpendicular to the axis X. As a result of this, the uppermost edge 25 of the tube T enters into the undercut region 21 and seats on the annular flange 20.

By comparison with Fig. 4B it can be seen that the gap between the tube T and the annular flange 20 is eliminated in the top half of the figure and the gap at the bottom is significantly reduced as compared to Fig. 4B.

As will to be apparent from Figs. 3A and 3B, the radially inward extent of the annular flange 20 is greater than the inner diameter of the tube T. As a result of this, the annular flange 20 protrudes slightly inwardly beyond the inner face 23 of the tube T. From a comparison of Figs. 3B and 4B, if it is assumed that the fibre F is fed from right to left, and in the vicinity of the connector 1 the tip of the fibre is travelling along the lower part of the inner face 23 in Figs. 3A and 4B, in the Fig. 3B, this will initially encounter the corner of the annular flange 20 which projects slightly beyond the inner surface 23 of the tube T. However, the fibre F can easily ride over this curved corner and, in doing so, this deflection should push the tip of the fibre above the exposed edge 28 of the tube T. By contrast, in Fig. 4B, annular projection S does not protrude beyond the inner surface 23 of the tube so there is nothing to begin to deflect the fibre F back towards the centre of the bore. Further, the gap G' in Fig. 4B is significantly larger than the corresponding gap in Fig. 3B. This, not only is fibre not deflected away from this gap, the presence of the large gap affords a significantly greater opportunity for fibre to enter the gap and become snagged on the edge 28 of the tube T.

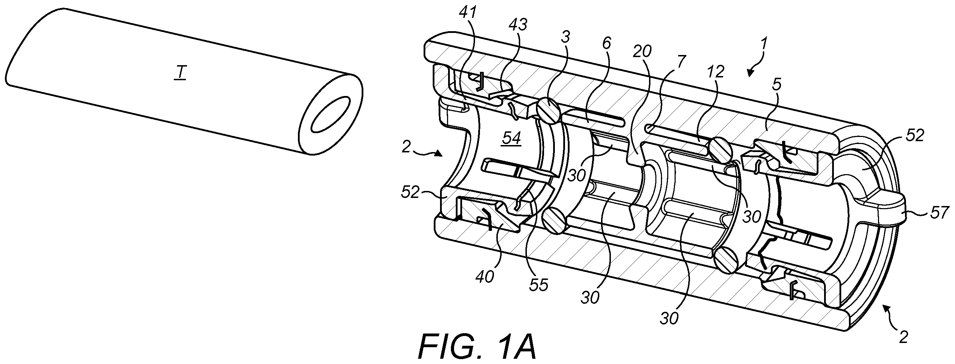

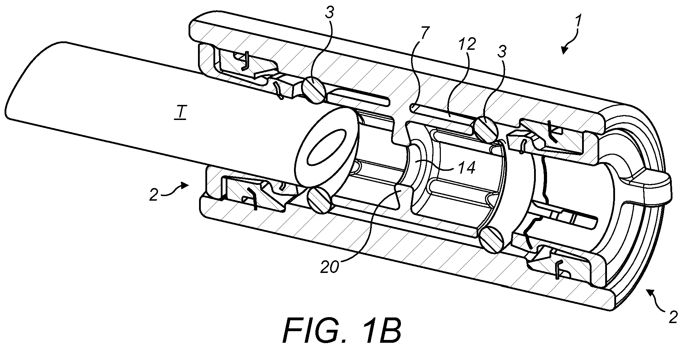

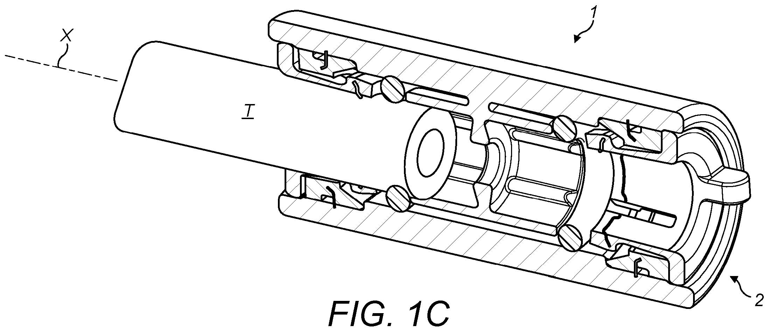

A further feature which prevents snagging of the tube is the splined arrangement listed as best illustrated in Figs. 1 and 2.

As can be seen from these figures, six axially extending splines 30 are equally spaced around the circumference of the inner sleeve 6. These are shown having a constant cross-section in a plane perpendicular to the axis. However, they may have a thickness which increases towards the annular flange 20.

As shown in Figs. 1A and 1B, a tube T has been fed from a coil and has taken on a flattened oval shape. As this enters the inner sleeve 6 the tube T engages with the enlarged portions of the tube T and tend to push this back to a more circular shape as shown in Fig. 1C.

Any number of splines may be used. However six has been found to be a reasonable number. This allows engagement with a flattened tube which is inserted in any orientation. A smaller number of flanges risks the possibility that the enlarged part of the tube enters between adjacent splines. On the other hand, adding more splines increases the insertion resistance for the tube T into the connector 1.

The splines 30 are dimensioned such that where the splines are present is slightly smaller than the outer diameter of the tube. The splines 30 will therefore bite into the material of the tube T in these regions. This ensures a secure and robust fit of the tube T and also provides the maximum opportunity for the splines to reduce the eccentricity of the tube.

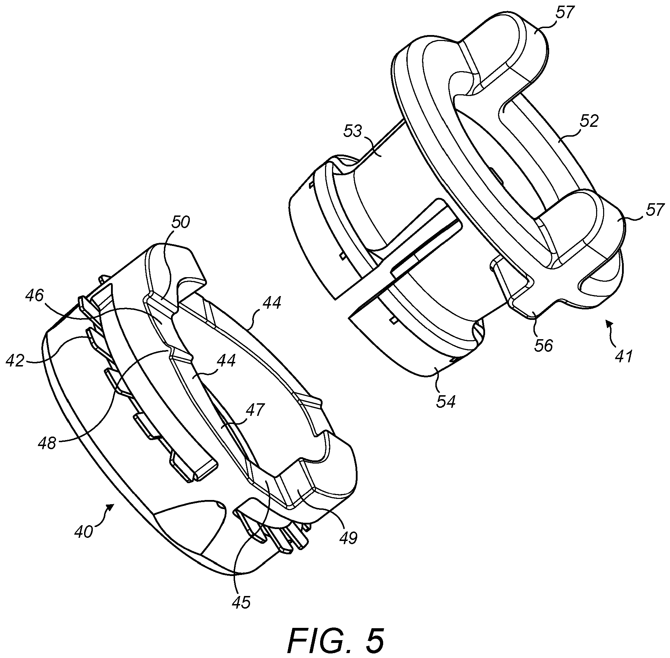

The connectors 2 (one at each end of the body 1) will now be described in greater detail with reference to Figs. 5 to 8.

The connectors 2 are formed of two components, namely a cartridge 40 and a collet 41.

The cartridge 40 has a generally annular configuration. The outer surface is provided with a plurality of flexible metal teeth 42. The cartridge 40 is inserted into an end of the body 1 until it seats against the second step 11. The teeth 42 grip the wall of the body 1 to ensure that the cartridge 40 is permanent retained in the body 1. At the end of the cartridge 40 adjacent to the second step 11, there is a tapered cam surface 43 which cooperates with the collet as described below. At the opposite end, the end face of the cartridge 40 is provided with a pair of ramped surfaces 44. Although two such surfaces are shown, there may be a single surface or there may be more than two. Each ramp surface has a low point 45 corresponding to an unlocked configuration and a high point 46 corresponding to a locked configuration within an inclined face 47 in between. A bump 48 is provided at the interface between the high point 46 and the inclined face 47. A similar bump may be provided interface between the incline face 47 and the low point 45. The low point 45 terminates at the first end stop 49 and the high point 46 terminates at a second end stop 50.

Most of the features of the collet 41 are conventional. It has a collet ring 52 from which a plurality of flexible arms 53 extend. Each arm has a head 54 at its distal end as is provided with an inwardly projected metal tooth 55.

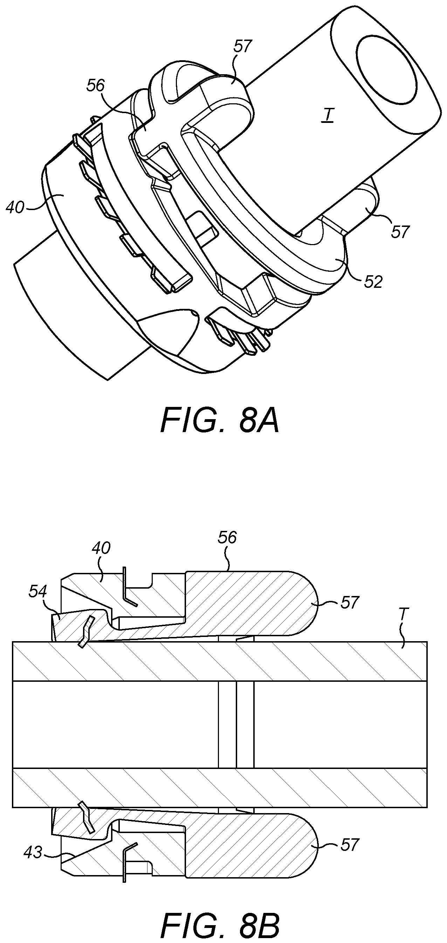

With a tube T inserted for example as shown in Fig. 8B, any movement tending to pull the tube T out of the connector causes the teeth 55 to grip into the tube, this pulls the heads 54 towards the tapered cam surface 43 on the cartridge 40 deflecting the arms 53 inwardly to provide a progressively increasing gripping force on the tube T. This serves to hold the tube T securely in place. This is the conventional manner in which a collet operates.

The adaptation provided by the present invention is the presence of a pair of cam followers 56 extending from the collet ring 52 towards the ramped surface 44 on the cartridge 40. Although two followers 56 are shown, in practice there are as many followers 56 as there are ramped surfaces 44. Alternatively, the cam arrangement may be inverted such that the ramped surface(s) is/are on the collet and the follower(s) is/are on the cartridge

The collet ring 52 is also provided with a pair of tabs 57 which extend from the collet ring 52 the opposite direction to the followers 56. As shown in the drawings, the position of the tabs 57 corresponds to a number and position of the followers 56. However, this may not be the case. The components can be offset from one another and there need not be same number of both.

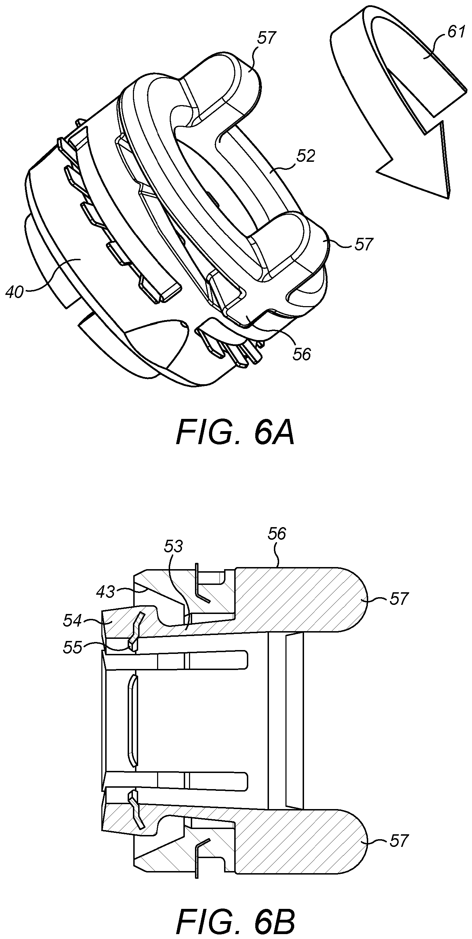

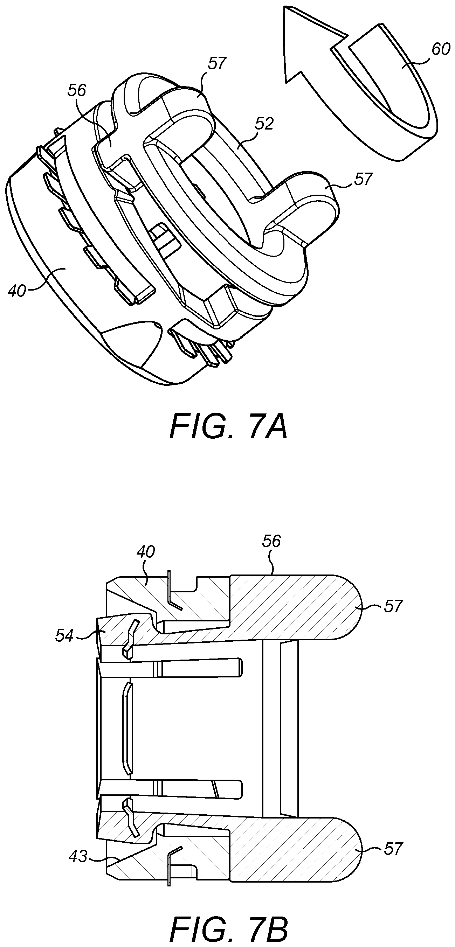

The operation of the collet 41 will now be described with reference to Figs. 6 to 8. The position shown in Figs. 6A and 6B is an unlocked position. In this position, the collet 41 has been rotated such that cam followers 56 abut the first end stops 49 such that the cam followers are at the low point 45. As will be apparent from Fig. 6B (particularly when compared with Fig. 7B) in this position, the collet 41 has a relatively large degree of axial freedom as it can move from the position in which the heads 54 engage with the tapered cam surface 43 all the way to the left (with reference to Fig. 6B) in the position shown in that figure. If held in that position by a user, the tube T can be withdrawn because the heads 54 are kept away from the tapered inclined surface 43 such that the collet cannot grip the tube. The collet 41 is then rotated in the direction of arrow 60 into the locked position shown in Fig. 7A. In doing so, the followers 56 moves up the inclined faces 57, over the bumps 48, providing a tactile feel to the user that a position has been reached, and onto the high point 46.

As will be appreciated from a comparison of Fig. 6B and Fig. 7B, in the locked position shown in Fig.7B, the collet has nothing like the same degree of freedom as in Fig. 6B so that it cannot be moved and held into an unlocked position where the teeth 55 disengage with the tube T. This is more apparent from Figs. 8A and 8B which show the collet in the same locked position as in Figs. 7A and 7B but with the tube in place. Here it can be seen how the presence of the tube pushes the heads 54 back onto the tapered cam surface 43.

The only way to remove the tube T in this locked configuration is for the user to grasp the tabs 57, rotate the collet 41 in the direction of arrow 61 in Figs. 6A to the unlocked position, and manually hold the collet in the position shown in Fig 6B while pulling the tube out of the body 1.

The tube T will usually be inserted with the collet 41 in the unlocked position shown in Figs. 6A and 6B as this allows for more scope for the arms 53 to be deflected upon insertion of the tube. However, as can be seen in Fig. 7B, even in the locked position, there is a small clearance between the head 54 and the tapered cam surface 43. Thus, it is possible to insert the tube T with the collet in the locked position. This provides a simple assembly process as the user needs only to be told to insert the tube into the collet. They do not need to concern themselves with the locking operation.

As can be best seen from Figs. 1A to C and Fig. 3, the collet ring 52 is axially set back inside the body 1. However, the tabs 57 extend beyond the end of the body 1. In this position, the collet 41 is protected from external impacts by the body 1. Further, because it is recessed within body 1, it is, to some extent, shielded from the soil in which the cables are buried. With this connector, the only points where dirt can potentially enter internal workings of the connector are between the collet ring 52 and the tube T and between the collet ring 52 and the body 1. However, these are interfaces where tight tolerances can be applied. Any dirt entering here cannot impair the visibility of the fibre F within the body 1. Further, because of the rotary action required to unlock the collet, even if some dirt does enter into these gaps, this is unlikely to jam the collet 41 in place as a rotary motion can readily generate sufficient torque to overcome any such sticking.

## Claims

1. A fibre optic cable tube connector, to connect tubes wherein fibre optic cables are fed, the fibre optic cable tube connector comprising a fibre optic cable tube connector body (1)
made of a plastic, the body defining a through bore and having an end connector at either end, each end connector (2) being configured to receive and grip a respective tube (T);
the body comprising an outer sleeve (5) and an inner sleeve (6), the inside of the inner sleeve being configured to receive the distal end of a respective tube;
the outer wall of the inner sleeve being generally spaced from an inner wall of the outer sleeve to define an air gap (12), the inner sleeve being supported on the outer sleeve by at least one circumferentially intermittent discrete web (7, 15) of material which supports the inner sleeve and maintains the air gap between the inner and outer sleeve.

2. A fibre optic cable tube connector according to claim 1, wherein there are a plurality of webs (7,15).

3. A fibre optic cable tube connector according to claim 2, wherein the webs (7,15) are angularly offset from one another.

4. A fibre optic cable tube connector according to claim 2 or claim 3, wherein the webs (7,15) are axially offset from the centre of the connector.

5. A fibre optic cable tube connector according to any preceding claim, wherein the or each web extends ir non-radial direction.

6. A fibre optic cable tube connector according to claim 5, wherein the or each web (7,15) is tangential to the inner sleeve.

7. A fibre optic cable tube connector according to any preceding claim, wherein the or each web (7,15) is arranged such that, upon a radial impact directly aligned with web, the outer sleeve (5) can be deformed by the width of the gap before any deformation occurs on the inner sleeve (6).

8. A fibre optic cable tube connector according to any preceding claim, wherein the total circumferential extent of all of webs (7,15) is less than 50%, preferably less than 20%, more preferably less than 10% and most preferably less than 5% of the circumference of the outer wall of the inner sleeve (6).

9. A fibre optic cable tube connector according to any preceding claim, wherein the or each web (7,15) occupies less than 50%, preferably less than 30%, more preferably less than 25% and most preferably less than 20% of the axial length of the outer wall of the inner sleeve (6).

10. A fibre optic cable tube connector according to any preceding claim, wherein the web (7,15) occupies less than 10%, more preferably less than 5% and most preferably less than 3% of the area of the outer wall of the inner sleeve.

11. A fibre optic cable tube connector according to any preceding claim, wherein the outer face of the fibre optic cable tube connector body (1) is devoid of ribs.

12. A fibre optic cable tube connector according to any preceding claim, wherein at least the axially central third of the fibre optic cable tube connector body (1) has a continuous cylindrical outer surface of constant radius.

13. A fibre optic cable tube connector according to claim 12, wherein substantially all of the length of the fibre optic cable tube connector body (1) has a continuous cylindrical outer surface of constant radius.

## Patentansprüche

1. Glasfaserkabelschlauchverbinder zum Verbinden von Schläuchen, worin Glasfaserkabel zugeführt werden, wobei der Glasfaserkabelschlauchverbinder einen Glasfaserkabelschlauchverbinderkörper (1) umfasst, welcher aus einem Kunststoff hergestellt ist, wobei der Körper eine Durchgangsbohrung definiert und an jedem Ende einen Endverbinder aufweist, wobei jeder Endverbinder (2) dazu eingerichtet ist, einen jeweiligen Schlauch (T) aufzunehmen und zu greifen,
wobei der Körper eine äußere Hülse (5) und eine innere Hülse (6) umfasst, wobei das Innere der inneren Hülse dazu eingerichtet ist, das distale Ende eines jeweiligen Schlauchs aufzunehmen;
wobei die äußere Wand der inneren Hülse im Allgemeinen von einer inneren Wand der äußeren Hülse beabstandet ist, um einen Luftspalt (12) zu definieren, wobei die innere Hülse durch wenigstens einen in Umfangsrichtung unterbrochenen diskreten Steg (7, 15) aus Material, welcher die innere Hülse haltert und den Luftspalt zwischen der inneren und der äußeren Hülse beibehält, an der äußeren Hülse gehaltert ist.

2. Glasfaserkabelschlauchverbinder nach Anspruch 1, wobei eine Mehrzahl von Stegen (7, 15) vorhanden ist.

3. Glasfaserkabelschlauchverbinder nach Anspruch 2, wobei die Stege (7, 15) winkelmäßig voneinander versetzt sind.

4. Glasfaserkabelschlauchverbinder nach Anspruch 2 oder Anspruch 3, wobei die Stege (7, 15) axial von der Mitte des Verbinders versetzt sind.

5. Glasfaserkabelschlauchverbinder nach jeglichem vorhergehenden Anspruch, wobei sich der oder jeder Steg in einer nicht-radialen Richtung erstreckt.

6. Glasfaserkabelschlauchverbinder nach Anspruch 5, wobei der oder jeder Steg (7, 15) tangential zu der inneren Hülse ist.

7. Glasfaserkabelschlauchverbinder nach jeglichem vorhergehenden Anspruch, wobei der oder jeder Steg (7, 15) derart angeordnet ist, dass auf eine radiale Belastung hin, welche direkt mit dem Steg ausgerichtet ist, die äußere Hülse (5) um die Breite des Spalts verformt werden kann, bevor jegliche Verformung an der inneren Hülse (6) eintritt.

8. Glasfaserkabelschlauchverbinder nach jeglichem vorhergehenden Anspruch, wobei das gesamte Ausmaß in Umfangsrichtung aller Stege (7, 15) kleiner als 50 %, bevorzugt kleiner als 20 %, bevorzugter kleiner als 10 % und noch bevorzugter kleiner als 5 %, des Umfangs der äußeren Wand der inneren Hülse (6) ist.

9. Glasfaserkabelschlauchverbinder nach jeglichem vorhergehenden Anspruch, wobei der oder jeder Steg (7, 15) weniger als 50 %, bevorzugt weniger als 30 %, bevorzugter weniger als 25 % und noch bevorzugter weniger als 20 % der axialen Länge der äußeren Wand der inneren Hülse (6) einnimmt.

10. Glasfaserkabelschlauchverbinder nach jeglichem vorhergehenden Anspruch, wobei der Steg (7, 15) weniger als 10 %, bevorzugter weniger als 5 % und noch bevorzugter weniger als 3 % der Fläche der äußeren Wand der inneren Hülse einnimmt.

11. Glasfaserkabelschlauchverbinder nach jeglichem vorhergehenden Anspruch, wobei die äußere Fläche des Glasfaserkabelschlauchverbinderkörpers (1) frei von Rippen ist.

12. Glasfaserkabelschlauchverbinder nach jeglichem vorhergehenden Anspruch, wobei wenigstens das axial mittlere Drittel des Glasfaserkabelschlauchverbinderkörpers (1) eine kontinuierliche zylindrische äußere Fläche mit einem konstanten Radius aufweist.

13. Glasfaserkabelschlauchverbinder nach Anspruch 12, wobei im Wesentlichen die gesamte Länge des Glasfaserkabelschlauchverbinderkörpers (1) eine kontinuierliche zylindrische äußere Fläche mit einem konstanten Radius aufweist.

## Revendications

1. Connecteur de tubes de câble à fibres optiques, pour connecter des tubes dans lesquels des câbles à fibres optiques sont alimentés, le connecteur de tubes de câble à fibres optiques comprenant un corps de connecteur de tubes de câble à fibres optiques (1) réalisé en plastique, le corps définissant un alésage traversant et présentant un connecteur d'extrémité au niveau de chaque extrémité, chaque connecteur d'extrémité (2) étant configuré pour recevoir et saisir un tube respectif (T) ;
le corps comprenant un manchon externe (5) et un manchon interne (6), l'intérieur du manchon interne étant configuré pour recevoir l'extrémité distale d'un tube respectif ;
la paroi externe du manchon interne étant généralement espacée d'une paroi interne du manchon externe pour définir un espace d'air (12), le manchon interne étant supporté sur le manchon externe par au moins une bande discrète circonférentiellement intermittente (7, 15) de matériau, qui supporte le manchon interne et maintient l'espace d'air entre les manchons interne et externe.

2. Connecteur de tubes de câble à fibres optiques selon la revendication 1, dans lequel se trouve une pluralité de bandes (7, 15).

3. Connecteur de tubes de câble à fibres optiques selon la revendication 2, dans lequel les bandes (7, 15) sont décalées angulairement les unes des autres.

4. Connecteur de tubes de câble à fibres optiques selon la revendication 2 ou la revendication 3, dans lequel les bandes (7, 15) sont décalées axialement par rapport au centre du connecteur.

5. Connecteur de tubes de câble à fibres optiques selon l'une quelconque des revendications précédentes, dans lequel la ou chaque bande s'étend dans une direction non radiale.

6. Connecteur de tubes de câble à fibres optiques selon la revendication 5, dans lequel la ou chaque bande (7, 15) est tangentielle au manchon interne.

7. Connecteur de tubes de câble à fibres optiques selon l'une quelconque des revendications précédentes, dans lequel la ou chaque bande (7, 15) est agencée de telle sorte que, lors d'un impact radial aligné directement avec la bande, le manchon externe (5) peut être déformé par la largeur de l'espace avant qu'une quelconque déformation ne se produise sur le manchon interne (6).

8. Connecteur de tubes de câble à fibres optiques selon l'une quelconque des revendications précédentes, dans lequel l'étendue circonférentielle totale de toutes les bandes (7, 15) est inférieure à 50 %, de préférence inférieure à 20 %, de manière plus préférée inférieure à 10 % et de la manière la plus préférée inférieure à 5 % de la circonférence de la paroi externe du manchon interne (6).

9. Connecteur de tubes de câble à fibres optiques selon l'une quelconque des revendications précédentes, dans lequel la ou chaque bande (7, 15) occupe moins de 50 %, de préférence moins de 30 %, de manière plus préférée moins de 25 % et de manière plus préférée moins de 20 % de la longueur axiale de la paroi externe du manchon interne (6).

10. Connecteur de tubes de câble à fibres optiques selon l'une quelconque des revendications précédentes, dans lequel la bande (7, 15) occupe moins de 10 %, de manière plus préférée moins de 5 % et de la manière la plus préférée moins de 3 % de la surface de la paroi externe du manchon interne.

11. Connecteur de tubes de câble à fibres optiques selon l'une quelconque des revendications précédentes, dans lequel la face extérieure du corps de connecteur de tubes de câble à fibres optiques (1) est dépourvue de nervures.

12. Connecteur de tubes de câble à fibres optiques selon l'une quelconque des revendications précédentes, dans lequel au moins le tiers axialement central du corps de connecteur de tubes de câble à fibres optiques (1) présente une surface extérieure cylindrique continue de rayon constant.

13. Connecteur de tubes de câble à fibres optiques selon la revendication 12, dans lequel sensiblement toute la longueur du corps de connecteur de tubes de câble à fibres optiques (1) présente une surface externe cylindrique continue de rayon constant.
